# EUROPÄISCHE PATENTSCHRIFT

(11) **EP 1 180 225 B1**
(45) Veröffentlichungstag und Bekanntmachung des Hinweises auf die Patenterteilung: **24.11.2004**
(21) Anmeldenummer: 00931124.2
(22) Anmeldetag: 05.05.2000
(51) Int. Cl.: F16L 55/165

(54) **AUSKLEIDUNGSSCHLAUCH MIT AUF FOLIENSCHLAUCH AUFKASCHIERTER VLIESSCHICHT**
LINER WITH A TUBULAR FILM THAT IS COATED WITH A NONWOVEN
GAINE COMPORTANT UNE COUCHE DE NON TISSE APPLIQUEE SUR UN FILM TUBULAIRE

(30) Priorität: 27.05.1999 DE 19924251
(43) Veröffentlichungstag der Anmeldung: 20.02.2002
(73) Patentinhaber: Betz, Wilhelm Leo, 76887 Bad Bergzabern (DE); Allmann, Ludwig, 76857 Silz (DE); Brandenburger, Joachim, 82467 Garmisch-Partenkirchen (DE)
(72) Erfinder: BRANDENBURGER, Joachim, D-82467 Garmisch-Partenkirchen (DE)
(74) Vertreter: Fischer, Wolf-Dieter, Dipl.-Ing.
(86) Internationale Anmeldenummer: PCT/EP2000/004056
(87) Internationale Veröffentlichungsnummer: WO 2000/073692

(56) Entgegenhaltungen:
- EP-A- 0 100 029
- EP-A- 0 101 340
- WO-A-91/18234
- US-A- 5 798 013

## Beschreibung

Die Erfindung betrifft einen Auskleidungsschlauch zum Herstellen eines Auskleidungsrohrs für Kanalsanierungsarbeiten, der mindestens eine Schicht aus mindestens einem schlauchförmig angeordneten, harzgetränkten Faserband und eine auf dem mindestens einen Faserband angeordneten Folienschlauch umfaßt.

Ein solcher Auskleidungsschlauch (Liner) sowie ein Verfahren zu dessen Herstellung ist aus der DE 4326503 C2 bekannt. Dort wird auf einen Wickeldorn ein Innenfolienschlauch aus einem Folienbandmaterial aufgewickelt, auf den wiederum harzgetränkte Faserbänder gewickelt werden. Die Anzahl der Faserbänder bestimmt dann die Stärke und Dicke des späteren Auskleidungsrohrs und kann den Anwendungsfällen in geeigneter Weise angepaßt werden.

Es besteht auch die Möglichkeit, einen vorextrudierten Innenschlauch zu verwenden, auf den dann die Faserbänder aufwickelbar sind. Des weiteren wird auf die Außenseite der Faserbänder ein Außenfolienschlauch aufgebracht, der zum einen das bessere Handhaben des Auskleidungsschlauchs gewähren soll und zum anderen das noch nicht ausgehärtete Harz beim Einziehen in ein sanierungsbedürftiges Kanalrohr vor Verseifung schützen soll. Hierzu ist es erforderlich, daß der Auskleidungsschlauch eine ausreichende Anbindung an das harzgetränkte Fasermaterial aufweist, da dieser beim Einziehen in den Kanal zahlreichen Belastungen, z.B. durch vorstehende Kanten, Wurzelstücke etc. ausgesetzt ist.

Ein in einen maroden Kanal eingezogener Auskleidungsschlauch wird mittels eines Druckmediums zur Anlage an die Kanalwandung gebracht und anschließend erfolgt eine Aushärtung des harzgetränkten Fasermaterials. Je nach Art des verwendeten Harzes erfolgt die Aushärtung mittels unterschiedlicher Medien. Bevorzugt wird zur Zeit eine UV-Aushärtung angewendet.

Ein weiteres Problem besteht darin, daß aufgrund von Bruchstellen in der Kanalwandung oder im Bereich von z.B. Hausanschlüssen die Kanalwandung keine ausreichende Abstützung beim Aufrichten des Auskleidungsschlauches mittels Druckmedium bietet. Deshalb muß die Wandung des Auskleidungsschlauches ausreichend stabil sein, damit es nicht zu übermäßigen Ausbeulungen und zu Beschädigungen an dieser Stelle kommt. Bislang wurden deshalb die Faserbänder immer in ausreichender Dicke gewickelt, um eine ausreichende Stabilität zu erhalten.

Der Erfindung liegt nunmehr die Aufgabe zugrunde, einen Auskleidungsschlauch der eingangs genannten Art mit verbesserten Festigkeitseigenschaften bereitzustellen.

Diese Aufgabe wird erfindungsgemäß dadurch gelöst, daß eine zum Bilden des Folienschlauchs verwendete Kunststoffolie auf der den harzgetränkten Faserbändem zugewandten Seite eine Armierung in Form einer aufkaschierten Vliesschicht aufweist.

Dadurch, daß die Vliesschicht durch den Kaschiervorgang partiell in die Oberfläche der Kunststoffolie eingeschmolzen ist, weist sie ein ähnliches Dehnungsverhalten auf. Hierdurch wird einem so aufgewickelten Folienschlauch eine zusätzliche Stabilität verliehen, die beim Expansionsvorgang des Auskleidungsschlauchs im Kanalabschnitt ein zusätzliches Widerlager darstellt, das brüchige Stellen oder Hausanschlußabschnitte überbrücken hilft. Hierdurch läßt sich ein viel gleichmäßigeres Auskleidungsrohr erzeugen, da beim Aufrichten des Schlauchs ein gleichmäßigeres Aufdehnen über den gesamten Umfang erfolgt. Des weiteren hat das Verbundmaterial aus Kunststoffolie und Vliesschicht noch den Vorteil, daß die an sich keine gute Verbindung mit dem Harz eingehende Kunststoffolie eine bessere Anbindung an das Faserbandmaterial erfährt. Das Harz durchdringt die Vliesschicht und stellt somit eine sehr innige und feste Verbindung bereit, die ein Verschieben der Folie, insbesondere beim Einzugvorgang in den Kanal, sehr stark erschwert. Hierdurch ist sichergestellt, daß das harzgetränkte Faserbandmaterial immer ausreichend mit einer außenliegenden Kunststoffolie abgedeckt ist und nicht mit Restwasser in den Kanalabschnitten in Berührung kommen kann. Des weiteren erfolgt eine bessere Verdichtung des Laminats, woraus sich eine bessere Qualität hinsichtlich mechanischer Kennwerte und gleichmäßiger Wandstärke beim ausgehärteten Auskleidungsrohr ergibt.

Bei Versuchen hat sich herausgestellt, daß bevorzugt die Vliesschicht aus einem Polyesterwerkstoff hergestellt sein kann. Aus diesem Werkstoff lassen sich sehr feine und dünne Vliese erzeugen, die einem Kaschiervorgang zugänglich sind.

Es besteht aber auch die Möglichkeit, daß der armierte Folienschlauch von einem Außenfolienschlauch aus mindestens einer Kunststoffolie umgeben ist. Eine solche Ausführungsform macht es möglich, den jeweiligen Folienschläuchen bestimmte Eigenschaften zuzuordnen. Die für den armierten Folienschlauch verwendete Kunststoffolie kann dann entsprechende Festigkeitseigenschaften aufweisen, wohingegen die für den Außenfolienschlauch verwendete Kunststoffolie ebenfalls vorteilhafte Eigenschaften wie z.B. lichtdicht, harzundurchlässig etc. sein kann. Der Außenfolienschlauch kann gewickelt oder durch eine oder mehrere Kunststoffolien, die längs aneinandergefügt an den Rändern verbunden werden, hergestellt sein. Selbstverständlich können diese Eigenschaften auch nur von der Kunststoffolie des armierten Folienschlauchs übernommen werden. Die Verwendung eines zusätzlichen Außenfolienschlauchs hat noch ergänzend den Vorteil, daß an die Dichtheit des armierten Folienschlauchs nicht zu hohe Anforderungen gestellt werden müssen. Insbesondere können vollflächig mit einer Vliesschicht kaschierte Folien Anwendung finden.

Als Kunststoffolie kann eine Polyäthylenfolie verwendet werden, die sowohl die entsprechenden Eigenschaften für die Kaschierung als auch die gewünschten Verarbeitungsvorteile mit sich bringt. Auch für einen Außenfolienschlauch ist dieses Material von Vorteil.

Die Vliesschicht kann in aller Regel sehr dünn ausgeführt werden, um die gewünschten Eigenschaften zu erzielen, so daß die so behandelte Folie weiterhin relativ leicht zu handhaben und auf den Faserschlauch aufwickelbar ist. Günstigerweise kann die Vliesschicht eine Dicke von 10 bis 250 µm, bevorzugt
60 µm, aufweisen.

Hierbei besteht gemäß einer Ausführungsform die Möglichkeit, daß das Gewicht der Vliesschicht 10-300 gr. pro qm, bevorzugt 30 gr. pro qm beträgt. Auch hierdurch wird deutlich, daß es sich um eine relativ leichte Vliesschicht handelt, die aber für die gewünschten positiven Zwecke vollkommen ausreichend ist.

Es besteht auch die Möglichkeit, daß die Kunststoffolie auf der den harzgetränkten Faserbändern abgewandten Seite eine als Diffusionsbarriere ausgestaltete Schicht aufweist. Aus Sicherheits- und Umweltgründen ist es von Vorteil, wenn auf jeden Fall verhindert wird, daß der Harzwirkstoff in den Erdbereich gelangt. Einige preiswerte Kunststoffolien stellen keine ausreichende Diffusionsbarriere für die Harzwirkstoffe dar, so daß eine zusätztiche Schicht benötigt wird.

Hierzu kann vorgesehen sein, daß die Kunststoffolie eine Verbundfolie mit einer Schicht, bevorzugt aus Polyamid (PA), als Diffusionsbarriere ist. Solche Verbundfolien können z.B. durch Koextrudieren sehr einfach hergestellt werden. Z.B. ist die Koextrusion von Polyäthylen und Polyamid technisch sehr gut durchführbar. Bei der Anhaftung der PA-Schicht an eine Polyäthylenfolie gibt es keine Haftungsprobleme.

Darüber hinaus können die Randbereiche der Kunststoffolie nicht mit einer Vliesschicht kaschiert sein, wobei die Randbereiche mindestens einer Kunststoffolie zum Bilden des Folienschlauchs zusammengeschweißt sind.

Ein Zusammenschweißen der mit einer Vliesschicht kaschierten Folie ist sehr schwer möglich, so daß hierzu die Randbereiche unkaschiert verbleiben und dann durch Aufeinanderlegen der nicht kaschierten Randbereiche und anschließendes Verschweißen eine dauerhafte Verbindung herstellbar ist. Obwohl es auch denkbar ist, einen solchen hergestellten Schlauch aus einer einzigen Folienbahn durch Zusammenschweißen der Randbereiche herzustellen, wird es bevorzugt, wenn mindestens zwei parallel zueinander verlaufende Folienbänder an ihren Randbereichen entsprechend miteinander verbunden werden.

Vorteilhafterweise können die Faserbänder mit einem UP-Harz (ungesättigtes Polyester) oder VE-Harz (Vinylester) getränkt sein. Diese Harze haben sich für das Einsatzgebiet der Auskleidungsschläuche bestens bewährt und sorgen für eine gute Anbindung an die Vliesschicht der Schlauchfolie.

Des weiteren bezieht sich die Erfindung auf ein Auskleidungsrohr, das durch Aushärten aus einem Auskleidungsschlauch nach einem der Ansprüche 1 bis 10 hergestellt ist. Dieses umfaßt eine ausgehärtete, rohrförmige Formstoffschicht mit eingelagerten Glasfasern und einem mit der Oberfläche der Formstoffschicht festverbundene Kunststoffolie. Die der Formstoffschicht zugewandte Seite der Kunststoffolie ist mit einer Armierung in Farm einer aufkaschierten Vliesschicht versehen. Während die Außenfolie mit Vliesschicht bei der Herstellung des Auskleidungsrohres ein Widerlager bildet und in diesem Zusammenhang für Vorteile sorgt, besteht der Vorteil beim fertigen Auskleidungsrohr darin, daß eine feste Anbindung der Außenfolie mit den Faserbändern gewährleistet ist.

Die Erfindung bezieht sich auch auf ein Verfahren zum Herstellen eines Auskleidungsschlauchs nach einem der Ansprüche 1 bis 10 für Kanalsanierungsarbeiten. Hierzu werden harzgetränkte Faserbänder zu einem Schlauchkörper geformt, der dann von einem Außenfolienschlauch umgeben wird. Üblicherweise erfolgt die Aufbringung der harzgetränkten Faserbänder mittels einer Wickeltechnik. Hierbei wird um einen auf einen Wickeldorn aufgezogenen Innenfolienschlauch mindestens ein harzgetränktes Faserband herumgewickelt und anschließend die Außenfläche mit einem Außenfolienschlauch versehen, der ebenfalls gewickelt werden kann. Bei dem erfindungsgemäßen Verfahren wird eine Kunststoffolie zum Erzeugen des Außenfolienschtauchs, die zumindest auf der später den harzgetränkten Faserbändern zugewandten Seite mit einer aufkaschierten Vliesschicht versehen ist, auf den Schlauchkörper aufgewickelt. Das Aufbringen einer mit einer aufkaschierten Vliesschicht versehenen Kunststoffolie wurde bislang bei Auskleidungsschläuchen nicht durchgeführt.

Darüber hinaus wird auch ein Verfahren zum Herstellen eines Auskleidungsrohres nach Anspruch 11 aus einem Auskleidungsschlauch, der durch das Verfahren nach Anspruch 12 hergestellt ist, beansprucht. Hierbei geht während des Aushärtungsvorgangs zum Aushärten des Schlauchkörpers zu einem Rohrkörper das auf die Kunststoffolie aufkaschierte Vlies eine feste Verbindung mit dem Schlauchkörper ein. Nachdem die Hauptfestigkeit des Auskleidungsrohres durch die ausgehärteten Faserbänder hergestellt wird und somit die Stützwirkung des Außenfolienschlauchs nur noch eine untergeordnete Rolle spielt, kommt es auf eine auch im Endzustand ausreichend feste Verbindung zwischen Kunststoffolie und Fasermaterial an. Hierzu wirkt sich das Vlies positiv aus.

Im folgenden werden Ausführungsbeispiele der vorliegenden Erfindung teilweise anhand einer Zeichnung näher erläutert. Es zeigen:
- Fig. 1: Eine schematische Darstellung eines Herstellungsvorgangs zum Erzeugen eines Auskleidungsschlauchs und
- Fig. 2: einen Ausschnitt eines Querschnitts eines folienbeschichteten Auskleidungsrohres.

Bei der Herstellung eines Auskleidungsschlauchs 1 wird eine Vorrichtung verwendet, wie sie z.B. in der DE 4326503 C2 beschrieben ist. Diese umfaßt einen stillstehenden Wickeldorn 2, auf den ein Innenfolienschlauch 3 aufgefädelt ist. Der Innenfolienschlauch 3 besteht aus Polyäthylen und ist durch ein Extrusionsschlauchfolienverfahren hergestellt worden. Die Außenfläche 4 des Innenfolienschlauchs 3 kann z.B. einer Koronabehandlung unterzogen werden, wodurch die Oberflächenspannung der Außenfläche 4 deutlich über einer Minimalgrenze von 38 mN/m angehoben wurde. Es besteht aber auch die Möglichkeit, die Außenfläche 4 des Innenfolienschlauches 3 mit einer Vliesschicht zu versehen, die durch einen Kaschiervorgang aufgebracht wird.

Im Bereich des Wickeldorns 2 befinden sich Vorratsrollen 5 und 6, deren Bandmaterial 7 bzw. 8 auf den Wickeldorn 2 abgewickelt werden. Die lediglich schematisch dargestellten Achsen 9 und 10 der Vorratsrollen 5 und 6 sind in ihrer Winkellage einstellbar in einer nicht dargestellten, um die Wickeldornachse A drehbaren Wickelvorrichtung angeordnet. Hierdurch wird das bandförmige Material 7 und 8 schraubenförmig um den Innenfolienschlauch 3 herumgewickelt. Bei dem bandförmigen Material 7 handelt es sich um ein harzgetränktes Glasfasergewebe. In diesem Fall wird ein UP-Harz verwendet. Der Harzauftrag kann bereits vor dem Wickelvorgang oder während des Wickelvorgangs erfolgen. Es besteht auch die Möglichkeit, mehrere Faserbänder 7 auf den Innenfolienschlauch 3 aufzuwickeln. Bei dem Bandmaterial 8 handelt es sich um eine Kunststoffolie aus Polyäthylen, die abschließend auf das harzgetrankte Glasfasergewebe aufgewickelt wird, so daß ein Folienschlauch 11 eine äußere Schutzschicht bildet.

Der so hergestellte Auskleidungsschlauch 1 wird flachgelegt und abgezogen und zur Vorratshaltung abgelegt oder direkt in einen zu sanierenden Kanal eingezogen.

Die Innenfläche 12 der Kunststoffolie 8 ist mit einer Armierung in Form einer Vliesschicht 13 kaschiert. Bevorzugt erfolgt der Kaschiervorgang durch partielles Aufschmelzen der Kunststoffolie 8, so daß das Polyestervlies teilweise in die Oberfläche 12 der Kunststoffolie 8 eingebettet ist. Das Vlies weist eine Dicke von 60 µm auf und hat ein Gewicht von 30 gr. pro qm. Die Vliesschicht 13 saugt sich mit dem Harz voll, so daß für eine innige Verbindung zwischen den Faserbändern 7 und der Kunststoffolie 8 auch im unausgehärteten Zustand gesorgt ist. Auch die Verwendung anderer Vliesmaterialien, wie z.B. Glasvlies, ist möglich.

Beim nachfolgenden Einziehen des Auskleidungsschlauches 1 in einen zu sanierenden Kanalabschnitt sind der Innenfolienschlauch 3 und der Folienschlauch 11 im wesentlichen unverschiebbar auf den Oberflächen der harzgetränkten Glasfasergewebe gehalten. Hierdurch entstehen nicht so leicht Leckagestellen, die eine Verseifung des Harzes mit sich bringen könnten.

Darüber hinaus besteht der Vorteil bei mit einer Vliesschicht kaschierten Kunststoffolie darin, daß diese auch bei längerer Lagerung nicht ihre Anbindungsneigung verlieren, wie das z.B. bei mittels Koronabehandlung oberflächenaktivierten Folien der Fall sein könnte.

Der mit dem Vlies 13 versehen Folienschlauch 11 dient aber auch beim Aufstellen des Auskleidungsschlauchs 1 im Kanalabschnitt als außenliegendes Widerlager, so daß ein gleichmäßigeres Aufrichten stattfindet, aufgrund der durch diese Armierung erreichten Zwangskraft. Insbesondere im Bereich von Ausbrüchen, Auswaschungen, wo der Auskleidungsschlauch 1 nicht unmittelbar an der Kanalwandung anliegt, sollen bestimmte mechanische Kennwerte erreicht werden, so daß der Auskleidungsschlauch 1 an diesen . Stellen nicht ausbeult und diese Bereiche hierdurch dünner werden. Die Armierung ersetzt an diesen Stellen das Außenlager beim Aufstellen. Nachdem der Auskleidungsschlauch 1 dann zu einem Auskleidungsrohr ausgehärtet ist, werden die mechanischen Kennwerte durch die ausgehärteten Faserbänder bereitgestellt.

Es besteht auch die Möglichkeit, als Kunststoffolie 3 bzw. 8 auch eine Verbundfolie mit einer Diffusionssperre zu verwenden.

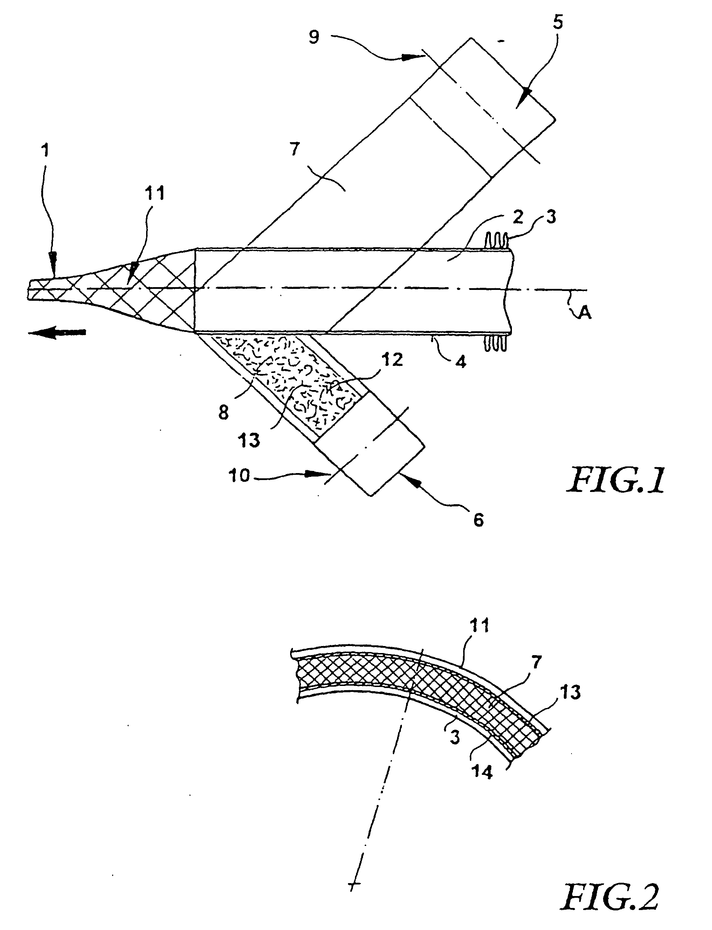

Die Fig. 2 zeigt im Querschnitt den Aufbau eines durch den Auskleidungsschlauch hergestellten Auskleidungsrohres. Die Vliesschicht 13 sorgt für einen innigen Verbund des Folienschlauchs 11 mit dem ausgehärteten Glasfasergewebe 7. In diesem Falle ist auch der Innenfolienschlauch 3 mit einer Vliesschicht 14 auf seiner Außenfläche 4 versehen.

Bei einer weiteren, nicht dargestellten Ausführungsform wird der Folienschlauch 11 noch von einem Außenfolienschlauch umgeben. Dieser Außenfolienschlauch kann dann sämtliche zusätzlichen Aufgaben, wie Diffusionsbarriere. lichtundurchlässig, reflektierend etc. übemehmen. Die Kunststoffolie für den armierten Folienschlauch kann dann nur die für sie günstigen Eigenschaften aufweisen und braucht z.B. keine Verbundfolie zum Erzeugen einer Diffusionsbarriere sein. Auch kann die Vliesschicht 13 über die komplette Breite der Kunststoffolie aufgetragen sein, da ein Verschweißen der Ränder und somit eine herzustellende Dichtheit dieses Folienschlauchs nicht zwingend erforderlich ist, da noch ein Außenfolienschlauch zur Erfüllung dieser Aufgabe vorgesehen ist. Der Außenfolienschlauch kann aus einer oder mehreren Kunststoffolien hergestellt werden. Diese können gewickelt oder in Längsrichtung aneinandergefügt und miteinander verbunden, z.B. verschweißt, werden.

## Patentansprüche

1. Auskleidungsschlauch zum Herstellen eines Auskleidungsrohrs für Kanalsanierungsarbeiten, der mindestens eine Schicht aus mindestens einem schlauchförmig angeordneten, harzgetränkten Faserband (7) und einen auf dem mindestens einen Faserband (7) angeordneten Außenfolienschlauch (11) umfaßt, **dadurch gekennzeichnet, daß** eine zum Bilden des Außenfolienschlauchs (11) verwendete Kunststoffolie (8) auf der den harzgetränkten Faserbändem (7) zugewandten Seite eine Armierung in Form einer aufkaschierten Vliesschicht (13) aufweist.

2. Auskleidungsschlauch nach Anspruch 1, **dadurch gekennzeichnet, daß** die Vliesschicht (13) aus einem Polyesterwerkstoff hergestellt ist.

3. Auskleidungsschlauch nach Anspruch 1 oder 2, **dadurch gekennzeichnet, daß** der armierte Außenfolienschlauch (11) von einem weiteren Außenfolienschlauch aus mindestens einer Kunststoffolie umgeben ist.

4. Auskleidungsschlauch nach Anspruch 1 bis 3, **dadurch gekennzeichnet, daß** die Kunststoffolie (8) eine Polyäthylenfolie ist.

5. Auskleidungsschlauch nach einem der Ansprüche 1 bis 4, **dadurch gekennzeichnet, daß** die Vliesschicht (13) eine Dicke von 10 bis 250 µm, bevorzugt 60 µm, aufweist.

6. Auskleidungsschlauch nach einem der Ansprüche 1 bis 5, **dadurch gekennzeichnet, daß** das Gewicht der Vliesschicht (13) 10 bis 300 gr. pro qm, bevorzugt 30 gr. pro qm, beträgt.

7. Auskleidungsschlauch nach einem der Ansprüche 1 bis 6, **dadurch gekennzeichnet, daß** die Kunststoffolie (8) auf der den harzgetränkten Faserbändern abgewandten Seite ein als Diffusionsbarriere ausgestaltete Schicht aufweist.

8. Auskleidungsschlauch nach Anspruch 7, **dadurch gekennzeichnet, daß** die Kunststoffolie (8) eine Verbundfolie mit einer Schicht, bevorzugt aus Polyamid (PA) als Diffusionsbarriere ist.

9. Auskleidungsschlauch nach einem der Ansprüche 1 bis 8, **dadurch gekennzeichnet, daß** die Randbereiche der Kunststoffolie (8) für den armierten Außenfolienschlauch (11) nicht mit einer Vliesschicht (13) kaschiert sind und daß die Randbereiche mindestens einer Kunststoffolie (8) zum Bilden des Folienschlauchs (11) zusammengeschweißt sind.

10. Auskleidurigsschlauch nach einem der Ansprüche 1 bis 9, **dadurch gekennzeichnet, daß** die Faserbänder (7) mit einem ungesättigten Polyesterharz (UP-Harz) oder Vinylesterharz (VE-Harz) getränkt sind.

11. Auskleidungsrohr, das durch Aushärten aus einem Auskleidungsschlauch (1) nach einem der Ansprüche 1 bis 10 hergestellt ist, mit einer ausgehärteten, rohrförmigen Formstoffschicht mit eingelagerten Glasfasern und einer mit der Oberfläche der Formstoffschicht fest verbundenen Kunststoffolie (8), deren der Formstoffschicht zugewandte Seite eine Armierung in Form einer aufkaschierten Vliesschicht (13) aufweist.

12. Verfahren zum Herstellen eines Auskleidungsschlauchs (1) nach einem der Ansprüche 1 bis 10 für Kanalsanierungsarbeiten, bei dem harzgetränkte Faserbänder (7) zu einem Schlauchkörper geformt werden, der dann von einem Außenfolienschlauch (11) umgeben wird, **dadurch gekennzeichnet, daß** eine Kunststoffolie (8) zum Erzeugen des Außenfolienschlauches (11), die zumindest auf der später den harzgetränkten Faserbändern (7) zugewandten Seite mit einer aufkaschierten Vliesschicht (13) versehen ist, auf den Schlauchkörper aufgewickelt wird.

13. Verfahren zum Herstellen eines Auskleidungsrohrs nach Anspruch 11 aus einem Auskleidungsschlauch, der durch das Verfahren nach Anspruch 12 hergestellt ist, **dadurch gekennzeichnet, daß** während des Aushärtvorgangs zum Aushärten des Schlauchkörpers zu einem Rohrkörper das auf die Kunststoffolie (11) aufkaschierte Vlies (13) eine feste Verbindung mit dem Schlauchkörper eingeht.

## Claims

1. Tubular liner for producing a pipe liner for sewer renovation work, which comprises at least one layer made of at least one tubularly disposed, resin-impregnated fibre sliver (7) and an outer tubular film (11) disposed on the at least one fibre sliver (7), **characterised in that**, on the side facing the resin-impregnated fibre slivers (7), a plastics material film (8) used for forming the outer tubular film (11) comprises a reinforcement in the form of a laminated nonwoven layer (13).

2. Tubular liner according to claim 1, **characterised in that** the nonwoven layer (13) is made of a polyester material.

3. Tubular liner according to either claim 1 or claim 2, **characterised in that** the sheathed outer tubular film (11) is surrounded by a further outer tubular film made of at least one plastics material film.

4. Tubular liner according to any one of claims 1 to 3, **characterised in that** the plastics material film (8) is a polyethylene film.

5. Tubular liner according to any one of claims 1 to 4, **characterised in that** the nonwoven layer (13) is between 10 and 250 µm, and is preferably 60 µm, thick.

6. Tubular liner according to any one of claims 1 to 5, **characterised in that** the density of the nonwoven layer (13) is between 10 and 300 g/m², and is preferably 30 g/m².

7. Tubular liner according to any one of claims 1 to 6, **characterised in that**, on the side remote from the resin-impregnated fibre bands, the plastics material film (8) comprises a layer configured as a diffusion barrier.

8. Tubular liner according to claim 7, **characterised in that** the plastics material film (8) is a composite film comprising a layer, preferably made of polyamide (PA), as a diffusion barrier.

9. Tubular liner according to any one of claims 1 to 8, **characterised in that** the edge regions of the plastics material film (8) for the laminated outer tubular film (11) are not laminated with a nonwoven layer (13), and **in that** the edge regions of at least one plastics material film (8) are welded together to form the tubular film (11).

10. Tubular liner according to any one of claims 1 to 9, **characterised in that** the fibre bands (7) are impregnated in an unsaturated polyester resin (UP resin) or a vinyl ester resin (VE resin).

11. Pipe liner, produced by curing from a tubular liner (1) according to any one of claims 1 to 10, comprising a cured, tubular, moulded material layer with embedded glass fibres and a plastics material film (8) which is rigidly connected to the surface of the moulded material layer, the side of the plastics material film that faces the moulded material layer comprising a reinforcement in the form of a laminated nonwoven layer (13).

12. Method for producing a tubular liner (1) for sewer renovation work according to any one of claims 1 to 10, wherein resin-impregnated fibre slivers (7) are moulded to form a tubular body, which is then surrounded by an outer tubular film (11), **characterised in that**, for producing the outer tubular film (11), a plastics material film (8), which is provided, at least on the side that will later face the resin-impregnated fibre slivers (7), with a laminated nonwoven layer (13), is wound on the tubular body.

13. Method for producing a pipe liner according to claim 11 from a tubular liner produced by the method according to claim 12, **characterised in that**, during the curing process for curing the tubular body to form a pipe body, the nonwoven material (13) laminated onto the plastics material film (11) becomes rigidly connected to the tubular body.

## Revendications

1. Gaine pour la fabrication d'un tube de revêtement pour des travaux de rénovation de canalisations, comportant au moins une couche d'au moins un ruban de fibres (7) imprégné de résine, disposé en forme de tuyau flexible, et un film tubulaire extérieur (11) disposé sur le au moins ruban de fibres (7), **caractérisée en ce qu'**un film de matière plastique (8), utilisé pour former le film tubulaire extérieur (11), présente sur le côté tourné vers les rubans de fibres (7) imprégnés de résine une armature en forme d'une couche de non-tissé (13) contrecollée.

2. Gaine suivant la revendication 1, **caractérisée en ce que** la couche de non-tissé (13) est fabriquée à partir d'un matériau polyester.

3. Gaine suivant l'une des revendications 1 et 2, **caractérisée en ce que** le film tubulaire extérieur (11) armé est entouré d'un autre film tubulaire extérieur composé d'au moins un film de matière plastique.

4. Gaine suivant les revendications 1 à 3, **caractérisée en ce que** le film de matière plastique (8) est un film de polyéthylène.

5. Gaine suivant l'une des revendications 1 à 4, **caractérisée en ce que** la couche de non-tissé (13) a une épaisseur de 10 à 250 µm, de préférence de 60 µm.

6. Gaine suivant l'une des revendications 1 à 5, **caractérisée en ce que** le poids de la couche de non-tissé (13) est de 10 à 300 g/m², de préférence de 30 g/m².

7. Gaine suivant l'une des revendications 1 à 6, **caractérisée en ce que** le film de matière plastique (8) présente une couche réalisée sous forme de barrière de diffusion sur le côté opposé aux rubans de fibres imprégnés de résine.

8. Gaine suivant la revendication 7, **caractérisée en ce que** le film de matière plastique (8) est un film composite avec une couche, de préférence en polyamide (PA), en tant que barrière de diffusion.

9. Gaine suivant l'une des revendications 1 à 8, **caractérisée en ce que** les zones de bordure du film de matière plastique (8) pour le film tubulaire extérieur armé (11) ne sont pas contrecollées d'un non-tissé (13), et que les zones de bordure d'au moins un film de matière plastique (8) sont soudées pour former le film tubulaire (11).

10. Gaine suivant l'une des revendications 1 à 9, **caractérisée en ce que** les rubans de fibres (7) sont imprégnés d'une résine polyester non-saturé (résine PNS) ou d'une résine vinylester (résine VE).

11. Tube de revêtement, fabriqué par durcissement à partir d'une gaine (1) suivant l'une des revendications 1 à 10, comprenant une couche de matière moulée tubulaire durcie avec des fibres de verre incluses et un film de matière plastique (8), assemblé fixement avec la surface de la couche de matière moulée et dont le côté, tourné vers la couche précitée, présente une armature en forme d'une couche de non-tissé (13) contrecollée.

12. Procédé de fabrication d'une gaine (1) suivant l'une des revendications 1 à 10 pour des travaux de rénovation de canalisations, dans lequel des rubans de fibres (7) imprégnés de résine sont formés en un corps de gaine, ensuite entouré d'un film tubulaire extérieur (11), **caractérisé en ce qu'**un film de matière plastique (8) est enroulé sur le corps de gaine pour produire le film tubulaire extérieur (11), muni d'une couche de non-tissé (13) contrecollée au moins sur le côté tourné ultérieurement vers les rubans de fibres (7) imprégnés de résine.

13. Procédé de fabrication d'un tube de revêtement suivant la revendication 1 à partir d'une gaine fabriquée par le procédé suivant la revendication 12, **caractérisé en ce que**, pendant l'opération de durcissement du corps de gaine en un corps de tube, le non-tissé (13) contrecollé sur le film de matière plastique (11) s'assemble fixement avec le corps de gaine.
